# EUROPÄISCHE PATENTANMELDUNG

(11) **EP 4 703 316 A1**
(43) Veröffentlichungstag der Anmeldung: **04.03.2026**
(21) Anmeldenummer: 24197814.7
(22) Anmeldetag: 02.09.2024
(51) Int. Cl.: B66C 23/78, B60S 9/02

(54) **STÜTZZYLINDERSICHERUNG**

(71) Anmelder: Palfinger AG, 5101 Bergheim bei Salzburg (AT)
(72) Erfinder: THALLER, Thomas Johannes, 5020 Salzburg (AT)
(74) Vertreter: Torggler & Hofmann Patentanwälte - Innsbruck

(57) **Zusammenfassung**

Anordnung mit
einem Stützzylinder (1) für ein Abstützsystem (10) einer Hebevorrichtung (20) und
zumindest einem Flanschring (3) zur Befestigung des Stützzylinders (1) an dem Abstützsystem (10), wobei
der Stützzylinder (1) ein Gehäuse (2) mit zumindest einem zumindest teilweise entlang eines Umfangs des Gehäuses (2) ausgebildeten Anschlag (6) für eine zumindest in axialer Richtung entlang des Gehäuses (2) formschlüssige Anlage des zumindest einen Flanschrings (3) aufweist, wobei
der Flanschring (3) teilbar ist und zumindest zwei zur Ausbildung des Flanschrings (3) miteinander verbindbare Flanschringteile (4, 5) aufweist, wobei
die zumindest zwei miteinander verbindbaren Flanschringteile (4, 5) entlang eines Umfangs des Gehäuses (2) um das Gehäuse (2) herum anordenbar sind und mit dem zumindest einen zumindest teilweise entlang eines Umfangs des Gehäuses (2) ausgebildeten Anschlag (6) in Anlage bringbar und zur Ausbildung des Flanschrings (3) miteinander verbindbar sind.

## Beschreibung

Die Erfindung betrifft eine Anordnung mit einem Stützzylinder für ein Abstützsystem einer Hebevorrichtung und zumindest einem Flanschring zur Befestigung des Stützzylinders an dem Abstützsystem. Die Erfindung betrifft weiter ein Abstützsystem mit zumindest einer solchen Anordnung, sowie eine Hebevorrichtung und ein Fahrzeug mit zumindest einem solchen Abstützsystem, und ein Fahrzeug mit einer Hebevorrichtung mit zumindest einem solchen Abstützsystem.

Zur Befestigung von Stützzylindern an einem Abstützsystem sind im Stand der Technik Flanschringe bekannt, welche entlang einer Längserstreckung des Stützzylinders auf ein Gehäuse eines Stützzylinders aufgeschoben werden und mit dem Gehäuse dauerhaft, beispielsweise durch eine Schweißverbindung, verbunden werden. Auch sind Verbindungen von solchen Flanschringen durch Verschraubungen bekannt, wobei dafür Gewindebohrungen im Gehäuse des Stützzylinders eingebracht werden müssen. Eine Befestigung eines Stützzylinders mit einem daran angebrachten Flanschring an einem Abstützsystem kann beispielsweise durch eine Verschraubung des Flanschrings am Abstützsystem oder eine dauerhafte Schweißverbindung des Flanschrings am Abstützsystem erfolgen.

Aufgabe der Erfindung ist es, eine vereinfachte Anordnung mit einem Stützzylinder für ein Abstützsystem einer Hebevorrichtung und zumindest einem Flanschring zur Befestigung des Stützzylinders an dem Abstützsystem anzugeben. Insbesondere soll eine Montage des Flanschrings am Stützzylinder vereinfacht werden.

Diese Aufgabe wird durch eine Anordnung mit einem Stützzylinder für ein Abstützsystem einer Hebevorrichtung und zumindest einem Flanschring zur Befestigung des Stützzylinders an dem Abstützsystem mit den Merkmalen des Anspruchs 1, ein Abstützsystem mit zumindest einer solchen Anordnung, sowie durch eine Hebevorrichtung und ein Fahrzeug mit zumindest einem solchen Abstützsystem, und durch ein Fahrzeug mit einer Hebevorrichtung mit zumindest einem solchen Abstützsystem gelöst.

Vorteilhafte Ausführungen der Erfindung sind in den abhängigen Ansprüchen angegeben.

Die Anordnung umfasst zumindest einen Stützzylinder für ein Abstützsystem einer Hebevorrichtung und zumindest einen Flanschring zur Befestigung des Stützzylinders an dem Abstützsystem.

Eine Befestigung des Stützzylinders an einem Abstützsystem kann über den Flanschring erfolgen. Der Flanschring kann dabei zumindest axial zwischen dem Stützzylinder und einem Teil des Abstützsystems wirkende Kräfte übertragen.

Ein Stützzylinder für ein Abstützsystem kann grundsätzlich längenveränderbar ausgebildet sein, wobei der Stützzylinder dazu zumindest zwei zueinander bewegbare, insbesondere linear relativ zueinander bewegbare, Teile aufweisen kann. Grundsätzlich kann der Stützzylinder ein Gehäuse aufweisen, zu welchem relativ eine Stange bewegbar ist. Insbesondere kann die Stange aus dem Gehäuse ausfahrbar und in das Gehäuse einfahrbar sein. Das Gehäuse kann in einer axialen Richtung eine Längserstreckung aufweisen.

Ein Stützzylinder kann beispielsweise in Form eines mit einem Fluid betriebenen Arbeitszylinders ausgebildet sein. Insbesondere kann der Stützzylinder in Form eines Hydraulikzylinders ausgebildet sein. Ein Stützzylinder kann beispielsweise auch in Form eines elektromechanischen Hubzylinders ausgeführt sein. Insbesondere kann der Stützzylinder in Form eines Linearmotors ausgebildet sein.

Ein Abstützsystem kann für eine Abstützung einer Hebevorrichtung, eines Fahrzeugs oder eines Fahrzeugs mit einer Hebevorrichtung auf einem Untergrund geeignet sein. Die Abstützung erfolgt dabei über in ihrer Längserstreckung verstellbare Stützzylinder. Durch ein Abstützsystem mit zumindest einem Stützzylinder kann eine Standfestigkeit und/oder eine Neigung eines Fahrzeugs und/oder einer Hebevorrichtung beeinflussbar sein.

Es ist vorgesehen, dass der Stützzylinder ein Gehäuse mit zumindest einem zumindest teilweise entlang eines Umfangs des Gehäuses ausgebildeten Anschlag aufweist. Ein solcher Anschlag kann sich entlang eines Teils des Umfangs des Gehäuses erstecken oder sich entlang des gesamten Umfangs des Gehäuses erstrecken. Ein solcher Anschlag ist für eine zumindest in axialer Richtung entlang des Gehäuses formschlüssige Anlage des zumindest einen Flanschrings ausgebildet. Eine axiale Richtung entlang des Gehäuses kann einer Richtung entlang der Längserstreckung des Gehäuses entsprechen. Ein solcher Anschlag kann auch für eine in radialer Richtung zum Gehäuse, also quer zu einer Längserstreckung des Gehäuses, formschlüssige Anlage des zumindest einen Flanschrings ausgebildet sein.

Durch eine Anlage des Flanschrings an einem solchen Anschlag können zumindest in einer axialen Richtung entlang des Gehäuses wirkende axiale Kräfte zwischen dem Flanschring und dem Stützzylinder übertragbar sein. Ein zumindest in einer axialen Richtung entlang des Gehäuses bestehender axialer Kraftschluss kann dabei zumindest durch einen axialen Formschluss zwischen dem Flanschring und dem zumindest einen Anschlag gegeben sein.

Es ist vorgesehen, dass der Flanschring teilbar ausgebildet ist und zumindest zwei zur Ausbildung des Flanschrings miteinander verbindbare Flanschringteile aufweist. Die Flanschringteile können zur Ausbildung des Flanschrings unmittelbar miteinander verbindbar sein. Der Flanschring kann zwei, drei oder mehr zur Ausbildung des Flanschrings miteinander verbindbare Flanschringteile aufweisen.

Es ist weiter vorgesehen, dass die zumindest zwei miteinander verbindbaren Flanschringteile entlang eines Umfangs des Gehäuses um das Gehäuse herum anordenbar sind und mit dem zumindest einen zumindest teilweise entlang eines Umfangs des Gehäuses ausgebildeten Anschlag in Anlage bringbar und zur Ausbildung des Flanschrings miteinander verbindbar sind.

Die miteinander verbindbaren Flanschringteile können dabei quer zu einer Längserstreckung des Gehäuses an dem Gehäuse anordenbar sein. Ein wie im Stand der Technik bekanntes, entlang einer Längserstreckung des Stützzylinders erfolgendes Aufschieben eines Flanschrings auf das Gehäuse des Stützzylinders kann durch ein quer zur Längserstreckung erfolgendes Anordnen der Flanschringteile entfallen.

Zur Ausbildung des Flanschrings können die zumindest zwei Flanschringteile entlang eines Umfangs des Gehäuses aneinander angereiht und miteinander verbunden werden.

Die miteinander verbindbaren Flanschringteile können an dem Gehäuse (zum Beispiel außerhalb eines Bereichs, in welchem der zumindest eine Anschlag ausgebildet ist), entlang eines Umfangs des Gehäuses um das Gehäuse herum anordenbar sein.

Die Flanschringteile können bei oder nach einem Verbinden der Flanschringteile zur Ausbildung des Flanschrings mit dem Anschlag in Anlage gebracht werden.

Der zumindest eine Anschlag kann in Form eines vom Gehäuse des Stützzylinders radial abstehenden Stegs und/oder in Form einer radialen Ausnehmung ausgebildet sein.

Der zumindest eine Anschlag kann abschnittsweise entlang eines Umfangs des Gehäuses ausgebildet sein. Es soll nicht ausgeschlossen sein, dass zwei oder mehr Anschläge abschnittsweise entlang derselben Umfangsline des Gehäuses ausgebildet sind.

Der zumindest eine Anschlag kann im Wesentlichen vollständig entlang eines Umfangs des Gehäuses ausgebildet sein. Dabei kann der zumindest eine Anschlag im Wesentlichen durchgehend entlang einer Umfangslinie ausgebildet sein.

Bei einem beispielsweise exzentrisch zum Gehäuse ausgebildeten Anschlag kann dieser abschnittsweise in Form eines abstehenden Stegs und abschnittsweise in Form einer Ausnehmung im Gehäuse ausgebildet sein.

Der zumindest eine Anschlag in Form eines vom Gehäuse des Stützzylinders radial abstehenden Stegs kann an dem Gehäuse des Stützzylinders ausgebildet sein oder an dem Gehäuse angeordnet sein. Der zumindest eine Anschlag in Form einer radialen Ausnehmung kann in dem Gehäuse des Stützzylinders ausgebildet sein oder an dem Gehäuse angeordnet sein.

Der zumindest eine Anschlag kann durch additive oder subtraktive Fertigung, insbesondere durch Fräsen, Drehen, Schweißen, Schrauben, Klemmen, Kleben, Nieten, Druckumformen oder Gießen, im und/oder am Gehäuse ausgebildet sein.

Das Gehäuse kann zumindest zwei entlang einer axialen Richtung des Gehäuses beabstandete Anschläge zur Anlage des zumindest einen Flanschrings aufweisen, wobei die zumindest zwei miteinander verbindbaren Flanschringteile mit einem der zumindest zwei Anschläge in Anlage bringbar und zur Ausbildung des Flanschrings miteinander verbindbar sein können.

Durch ein Vorsehen von zumindest zwei entlang einer axialen Richtung des Gehäuses beabstandeten Anschlägen können entlang einer axialen Richtung des Gehäuses zumindest zwei Befestigungspositionen zur Befestigung des Stützzylinders an dem Abstützsystem geschaffen werden. Eine Befestigung des Stützzylinders an einem Abstützsystem kann über den wahlweise an einer der zumindest zwei Befestigungspositionen angeordneten Flanschring erfolgen.

Ein Flanschring kann wahlweise mit einem der zumindest zwei Anschläge in Anlage gebracht werden.

Die de entlang einer axialen Richtung des Gehäuses beabstandeten Anschläge können gleich orientiert sein, wobei jeweils in die gleiche axiale Richtung entlang des Gehäuses ein axialer Formschluss zwischen dem Flanschring und dem jeweiligen Anschlag ausbildbar sein kann. Durch eine Anlage des Flanschrings an dem jeweiligen Anschlag können zumindest in einer axialen Richtung entlang des Gehäuses axiale Kräfte zwischen dem Flanschring und dem Stützzylinder übertragbar sein.

In einer vorteilhaften Ausführung kann das Gehäuse zur Ausbildung zumindest einer Nut zumindest zwei entlang einer axialen Richtung des Gehäuses gegenüberliegende Anschläge zur formschlüssigen Aufnahme des zumindest einen Flanschrings aufweisen. Die zumindest zwei miteinander verbindbaren Flanschringteile können in die zumindest eine Nut einsetzbar sein und in eingesetztem Zustand in der Nut zur Ausbildung des Flanschrings miteinander verbindbar sein.

Die zumindest zwei eine Nut ausbildenden Anschläge können entlang einer axialen Richtung des Gehäuses voneinander beabstandet sein und entgegengesetzt orientiert sein, wobei jeweils in entgegengesetzte axiale Richtungen entlang des Gehäuses ein axialer Formschluss zwischen dem Flanschring dem jeweiligen Anschlag der Nut ausbildbar ist. Durch eine Anlage des Flanschrings an dem jeweiligen Anschlag der Nut können in entgegengesetzte axiale Richtungen entlang des Gehäuses axiale Kräfte zwischen dem Flanschring und dem Stützzylinder übertragbar sein. Eine axiale Bewegbarkeit der Flanschringteile und des Flanschrings entlang des Gehäuses kann durch die Anschläge der Nut begrenzbar sein.

Die zumindest zwei miteinander verbindbaren Flanschringteile können in die zumindest eine Nut einsetzbar sein, wobei die Flanschringteile dabei zwischen den Anschlägen der Nut an dem Gehäuse entlang eines Umfangs des Gehäuses um das Gehäuse herum anordenbar sind. Ein Verbinden der Flanschringteile zur Ausbildung des Flanschrings kann in eingesetztem Zustand in der Nut erfolgen.

Vorteilhaft weist das Gehäuse zumindest zwei entlang einer axialen Richtung des Gehäuses beabstandete Nuten zur formschlüssigen Aufnahme eines Flanschrings auf. Jede Nut kann dabei zumindest zwei die Nut ausbildende Anschläge aufweisen, wobei die Anschläge wie zuvor beschrieben entlang einer axialen Richtung des Gehäuses voneinander beabstandet und entgegengesetzt orientiert sein können.

Die zumindest zwei miteinander verbindbaren Flanschringteile eines Flanschrings können in eine der zumindest zwei Nuten einsetzbar sein und in eingesetztem Zustand in der Nut zur Ausbildung des Flanschrings miteinander verbindbar sein.

Durch ein Vorsehen von zumindest zwei entlang einer axialen Richtung des Gehäuses beabstandeten Nuten können entlang einer axialen Richtung des Gehäuses zumindest zwei Befestigungspositionen zur Befestigung des Stützzylinders an dem Abstützsystem geschaffen werden. Eine Befestigung des Stützzylinders an einem Abstützsystem kann über den wahlweise in einer der zumindest zwei Nuten angeordneten Flanschring erfolgen.

Der Flanschring kann eine gewisse Höhenerstreckung aufweisen. Die zumindest eine Nut kann entlang des Gehäuses des Stützzylinders im Wesentlichen eine axiale Erstreckung mit der doppelten Höhenerstreckung des Flanschrings aufweisen. Dadurch können die zumindest zwei miteinander verbindbaren Flanschringteile axial versetzt und mit einem umfänglichen Überlapp in der zumindest einen Nut anordenbar sein. Vorzugsweise kann die zumindest eine Nut kann entlang des Gehäuses des Stützzylinders eine axiale Erstreckung mit zumindest der doppelten Höhenerstreckung des Flanschrings aufweisen.

Die zumindest zwei Flanschringteile können zur Ausbildung des Flanschrings formschlüssig miteinander verbindbar, insbesondere lösbar verbindbar, sein. Ein Formschluss kann dabei in eine Umfangsrichtung des Flanschrings bestehen. Vorzugsweise kann durch den Formschluss eine Relativbewegung der Flanschringteile zueinander in eine radiale Richtung des Gehäuses, in anderen Worten also quer zu einer Längserstreckung des Gehäuses des Stützzylinders, sperrbar sein.

Die zumindest zwei Flanschringteile können zur Ausbildung des Flanschrings durch eine Relativbewegung der Flanschringteile entlang einer axialen Richtung des Gehäuses des Stützzylinders formschlüssig miteinander verbindbar sein. Ein Formschluss kann dabei in einer Umfangsrichtung des Flanschrings bestehen. Durch den Formschluss kann vorzugsweise eine Relativbewegung der Flanschringteile zueinander in eine radiale Richtung zum Gehäuse des Stützzylinders sperrbar sein.

In einer vorteilhaften Ausbildung des Flanschrings können die zumindest zwei Flanschringteile zueinander komplementäre Verbindungsabschnitte mit zumindest einer Positivform und/oder zumindest einer Negativform aufweisen. Die Positivform und die Negativform können miteinander formschlüssig in Eingriff bringbar sein. Eine Positivform kann in Form eines von einem Flanschringteil abstehenden Fortsatzes ausgebildet sein. Eine Negativform kann in Form einer Ausnehmung in einem Flanschringteil ausgebildet sein.

Die zueinander komplementäre Verbindungsabschnitte der zumindest zwei Flanschringteile können vorzugsweise eine Schwalbenschwanzgeometrie, in der englischsprachigen Literatur auch als "dovetail joint" bekannt, aufweisen. Bei einer solchen Schwalbenschwanzgeometrie kann ein Fortsatz einer Positivform eine Ausnehmung einer Negativform hintergreifen.

Die zueinander komplementären Verbindungsabschnitte der Flanschringteile können puzzleartig miteinander verbindbar sein.

In einer vorteilhaften Ausführung eines Flanschrings mit zumindest zwei verbindbaren Flanschringteilen kann jeder Flanschringteil komplementäre Verbindungsabschnitte in Form einer Positivform und einer Negativform aufweisen.

Der zumindest eine Flanschring kann eine an eine Querschnittskontur des Gehäuses des Stützzylinders angepasste Innenkontur aufweisen. Insbesondere kann das Gehäuse des Stützzylinders eine im Wesentlichen kreisrunde Querschnittskontur aufweisen, wobei der Flanschring entsprechend eine daran angepasste, im Wesentlichen kreisrunde Innenkontur ausweisen kann.

Vorteilhaft kann ein einzelner Flanschringteil eine Innenkontur aufweisen, die im Wesentlichen den halben Umfang des Gehäuses oder weniger als den halben Umfang des Gehäuses umgreift.

In einer vorteilhaften Ausführung kann der zumindest eine Flanschring eine an eine Querschnittskontur des Gehäuses im Bereich benachbart zu einem Anschlag oder im Bereich einer Nut angepasste Innenkontur aufweisen.

Eine Außenkontur des Flanschrings kann vorteilhaft zumindest einen Befestigungsflansch zur Befestigung des zumindest einen Stützzylinders an dem Abstützsystem ausbilden. An den Flanschringteilen können geeignete Befestigungsflansche für ein Befestigung durch beispielsweise Schweißen, Verschrauben, Klemmen, Kleben oder Nieten ausgebildet sein.

In einer vorteilhaften Ausführung des Flanschrings weist der Flanschring zwei zur Ausbildung des Flanschrings miteinander verbindbare Flanschringteile auf. Jeder Flanschringteil kann vorteilhaft jeweils zwei komplementäre Verbindungsabschnitte in Form einer Positivform und einer Negativform aufweisen, die puzzleartig miteinander verbindbar sind. Die zwei miteinander verbindbaren Flanschringteile können identisch ausgebildet sein, wodurch die Fertigung vereinfacht werden kann.

Schutz wird auch begehrt für ein Abstützsystem, welches für eine Abstützung einer Hebevorrichtung, eines Fahrzeugs oder eines Fahrzeugs mit einer Hebevorrichtung auf einem Untergrund geeignet sein kann.

Das Abstützsystem kann zumindest einen Ausleger mit einer Montageöffnung zur Aufnahme zumindest eines Stützzylinders und zumindest einer wie zuvor beschriebenen Anordnung mit einem Stützzylinder und zumindest einem teilbaren Flanschring aufweisen.

Ein Ausleger kann eine Längserstreckung und entlang der Längserstreckung eine zumindest abschnittsweise offene und/oder geschlossene Querschnittsform, wie etwa einen U-Querschnitt oder einen kastenförmigen Querschnitt, aufweisen. Der Ausleger kann, insbesondere in Montagelage an einer Hebevorrichtung oder einem Fahrzeug, eine Oberseite und eine Unterseite aufweise. In dem Ausleger kann eine Montageöffnung ausgebildet sein, die sich beispielsweise von einer Oberseite zu einer Unterseite des Auslegers erstreckt. Eine Montageöffnung kann auch stirnseitig an einem Ende des Auslegers ausgebildet sein.

Das Gehäuse des zumindest einen Stützzylinders kann zumindest abschnittsweise in der Montageöffnung anordenbar sein und über den zumindest einen Flanschring am Ausleger befestigbar sein. Vorteilhaft kann die Befestigung über den Flanschring an einer Unterseite des zumindest einen Auslegers erfolgen, wobei axial auf den Stützzylinder wirkende Kräfte vom Gehäuse des Stützzylinders in den Ausleger einleitbar sind. Dabei kann zwischen dem Gehäuse des Stützzylinders, dem zumindest einen zumindest teilweise entlang eines Umfangs des Gehäuses ausgebildeten Anschlag, dem Flanschring und dem Ausleger ein Kraftschluss bestehen. Insbesondere kann der Kraftschluss über einen Formschluss zwischen Gehäuse, Anschlag, Flanschring und Ausleger bestehen.

Das Abstützsystem kann mit einem Fahrzeugrahmen verbindbar sein.

Das Abstützsystem kann mit einer Hebevorrichtung, insbesondere einer Basis einer Hebevorrichtung, verbindbar sein.

Das Abstützsystem kann zwei oder mehrere Ausleger und zwei oder mehrere Stützzylinder aufweisen.

Insbesondere kann das Abstützsystem vier Stützzylinder aufweisen, die Teil einer sogenannten H-Abstützung (H-förmige Anordnung der Stützzylinder) oder einer X-Abstützung (X-förmige Anordnung, auch Stern-Abstützung genannt) sein können.

Es soll nicht ausgeschlossen sein, dass das Abstützsystem horizontal längenverstellbare Ausleger, an denen die Stützzylinder anordenbar sind, aufweist.

Weist das Gehäuse zumindest zwei entlang einer axialen Richtung des Gehäuses beabstandete Anschläge und/oder Nuten für einen Flanschring auf, können entlang einer axialen Richtung des Gehäuses zumindest zwei Befestigungspositionen zur Befestigung des Stützzylinders an einem Ausleger des Abstützsystems geschaffen werden. Die unterschiedlichen Befestigungspositionen können unterschiedlichen Montagehöhen des Stützzylinders entsprechen.

Ausleger von Abstützsystemen können an einem Fahrzeug oder einer Hebevorrichtung in unterschiedlichen Höhen gegenüber einem Untergrund angeordnet sein, beispielsweise entsprechend unterschiedlicher Bauhöhen eines Fahrzeugrahmens oder einer Basis einer Hebevorrichtung. Um eine Abstützung auf einem Untergrund innerhalb eines Verstellbereichs eines in der Längserstreckung verstellbaren Stützzylinders zu gewährleisten, ist es vorteilhaft, wenn die Befestigungsposition des Stützzylinders an die Lage des Auslegers anpassbar ist. Dies kann durch unterschiedliche Befestigungspositionen mittels zumindest zwei entlang einer axialen Richtung des Gehäuses beabstandeter Anschläge und/oder Nuten für einen Flanschring erreicht werden.

In einer vorteilhaften Ausführung des Abstützsystems kann die Anordnung zumindest ein an dem zumindest einen Ausleger verspannbares Spannblech umfassen, wobei ein axiales Spiel des Stützzylinders in der Montageöffnung durch das zumindest eine Spannblech ausgleichbar sein kann. Das Spannblech kann am Gehäuse des Stützzylinders befestigt sein und am Ausleger anliegen. Eine Befestigung des Spannblechs am Gehäuse kann beispielsweise mittels Schweißen, Verschrauben, Klemmen, Kleben oder Nieten erfolgen. Eine Anlage des Spannblechs am Ausleger kann insbesondere an einer Oberseite des zumindest einen Auslegers erfolgen. Ein Verspannen kann durch eine elastische Verformung des Spannblechs erfolgen.

Das Gehäuse des Stützzylinders kann zudem zumindest einen Anschlag für eine Befestigung des Spannblechs aufweisen. Vorzugsweise kann der Anschlag in Form einer radial vom Gehäuse abstehenden Lasche ausgebildet sein. Die radial abstehende Lasche kann durch beispielsweise Schweißen, Verschrauben, Klemmen, Kleben oder Nieten am Gehäuse angeordnet sein. Weist das Gehäuse zumindest zwei entlang einer axialen Richtung des Gehäuses beabstandete Anschläge und/oder Nuten für einen Flanschring auf, können zumindest zwei entlang einer axialen Richtung des Gehäuses entsprechend beabstandete Laschen am Gehäuse angeordnet sein. Vorteilhaft kann ein Abstand zwischen zumindest einem Anschlag und/oder einer Nut und zumindest einer Lasche an einen Abstand einer Oberseite und einer Unterseite des Auslegers angepasst sein.

Vorzugsweise ist durch ein Spannblech, das auf der Lasche befestigt ist, der Stützzylinder in der Montageöffnung des Auslegers nach oben verspannt und verdrehgesichert. Dadurch kann sich der Stützzylinder nicht mehr in axialer Richtung verschieben.

In einer vorteilhaften Ausführung des Abstützsystems kann die Anordnung zumindest ein gemeinsam mit dem Stützzylinder in die Montageöffnung einsetzbares Ausgleichsblech umfassen, wobei ein radiales Spiel des Stützzylinders in der Montageöffnung durch das zumindest eine Ausgleichsblech ausgleichbar ist. Vorzugsweise kann das Ausgleichsblech gemeinsam mit dem Stützzylinder in eine Montageöffnung an einer Oberseite und/oder einer Unterseite des Auslegers einsetzbar sein. Das Ausgleichsblech kann ringförmig ausgebildet sein.

Schutz wird auch begehrt für eine Hebevorrichtung mit einem wie zuvor beschriebenen Abstützsystem. Die Hebevorrichtung kann ein mehrere durch Aktuatoren bewegbare Arme aufweisendes Armsystem aufweisen. Ein Abstützsystem kann an einer ein Armsystem lagernden Basis der Hebevorrichtung angeordnet sein.

Vorzugsweise kann die Hebevorrichtung in Form eines Ladekrans, eines Knickarmkrans oder einer Hubarbeitsbühne ausgebildet sein. Eine Hebevorrichtung in Form einer Hubarbeitsbühne kann beispielsweise in Form eines Krans mit einem Armsystem mit schwenkbaren und längenveränderbaren Armen und einem am Armsystem bewegbar angeordneten Arbeitskorb ausgebildet sein.

Schutz wird auch begehrt für ein Fahrzeug mit zumindest einem wie zuvor beschriebenen Abstützsystem. Ein Abstützsystem kann an einem Fahrzeugrahmen des Fahrzeugs angeordnet sein. Weist das Fahrzeug eine Hebevorrichtung auf, kann die Hebevorrichtung zumindest ein wie zuvor beschriebenen Abstützsystem aufweisen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigt:
Figur 1 ein Abstützsystem mit einer ersten Ausführung einer Anordnung mit einem Stützzylinder und einem Flanschring
Figur 2 ein Abstützsystem mit einer zweiten Ausführung einer Anordnung mit einem Stützzylinder und einem Flanschring
Figur 3a und 3b eine Ausführung eines teilbaren Flanschrings mit zwei miteinander verbindbaren Flanschringteilen
Figur 4a und 4b Ansichten eines Fahrzeugs mit einem Abstützsystem mit an unterschiedlichen Befestigungspositionen befestigten Stützzylindern
Figur 5 bis 9 Schnittdarstellungen zu einem in einem Ausleger befestigten Stützzylinder
Figur 10a und 10b Ansichten eines Stützzylinders und einer Schnittdarstellung eines Auslegers mit einer Montageöffnung
Figur 11a und 11b Ansichten eines in einer Montageöffnung angeordneten Stützzylinders mit einem verschraubten Spannblech
Figur 12a und 12b Ansichten eines in einer Montageöffnung angeordneten Stützzylinders mit zusätzlichen Ausgleichsblechen
Figur 13a und 13b Ansichten eines in einer Montageöffnung angeordneten Stützzylinders mit in eine Nut eingesetzten Flanschringteilen
Figur 14a und 14b Ansichten eines an einem Ausleger über einen Flanschring befestigten Stützzylinders
Figur 15 eine Hebevorrichtung mit einem Abstützsystem
Figur 16 ein Fahrzeug mit einer solchen Hebevorrichtung

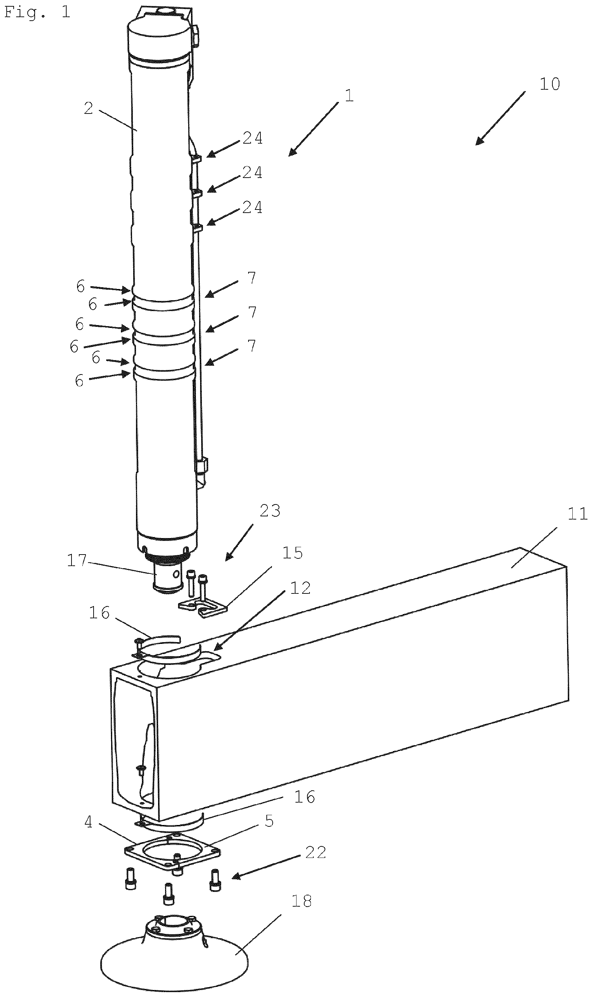

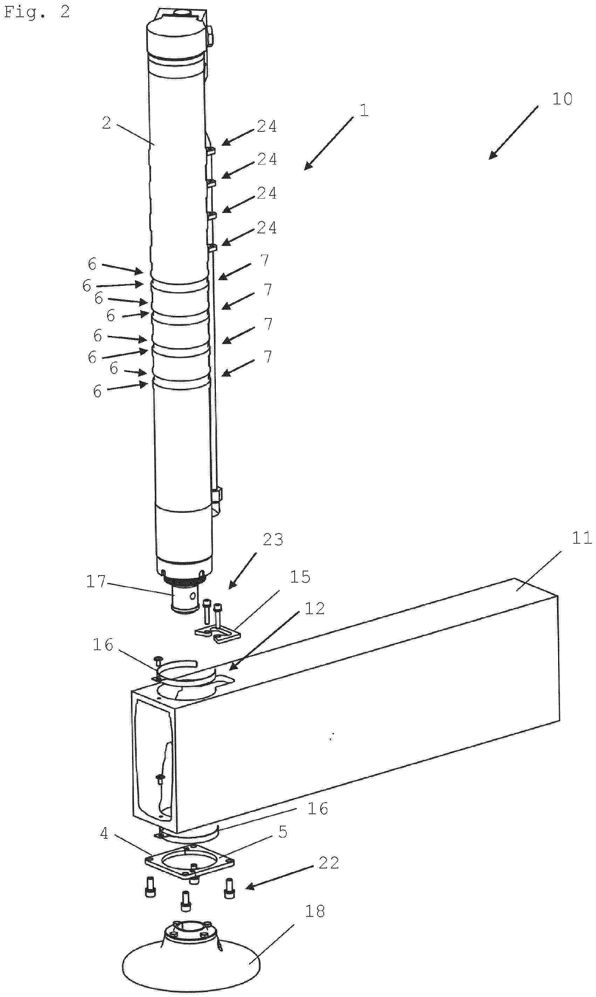

Figur 1 zeigt eine Explosionsdarstellung eines Abstützsystems 10 mit einer ersten Ausführung einer Anordnung mit einem Stützzylinder 1 und einem Flanschring 3 zur Befestigung des Stützzylinders 1 an dem Abstützsystem 10. Figur 2 zeigt eine Explosionsdarstellung eines Abstützsystems 10 mit einer zweiten Ausführung einer Anordnung mit einem Stützzylinder 1 und einem Flanschring 3 zur Befestigung des Stützzylinders 1 an dem Abstützsystem 10.

Der Stützzylinder 1 weist in den gezeigten Ausführungen ein Gehäuse 2 mit mehreren entlang eines Umfangs des Gehäuses 2 ausgebildeten, entlang einer axialen Richtung des Gehäuses 2 beabstandeten Anschlägen 6 für eine zumindest in axialer Richtung entlang des Gehäuses 2 formschlüssige Anlage des zumindest einen Flanschrings 3 auf.

Allgemein können die Anschläge 6 in Form eines vom Gehäuse 2 des Stützzylinders 1 radial abstehenden Stegs und/oder in Form einer radialen Ausnehmung ausgebildet sein. In der in Figur 1 gezeigten Ausführung weist das Gehäuse 2 mehrere Anschläge 6 in Form von drei umfänglichen Nuten 7 auf. In der in Figur 2 gezeigten Ausführung weist das Gehäuse 2 mehrere Anschläge 6 in Form von vier umfänglichen Nuten 7 auf.

Durch ein Vorsehen von entlang einer axialen Richtung des Gehäuses 2 beabstandeten Nuten 7 können entlang einer axialen Richtung des Gehäuses 2 entsprechende Befestigungspositionen zur Befestigung des Stützzylinders 1 an dem Abstützsystem 10 geschaffen werden.

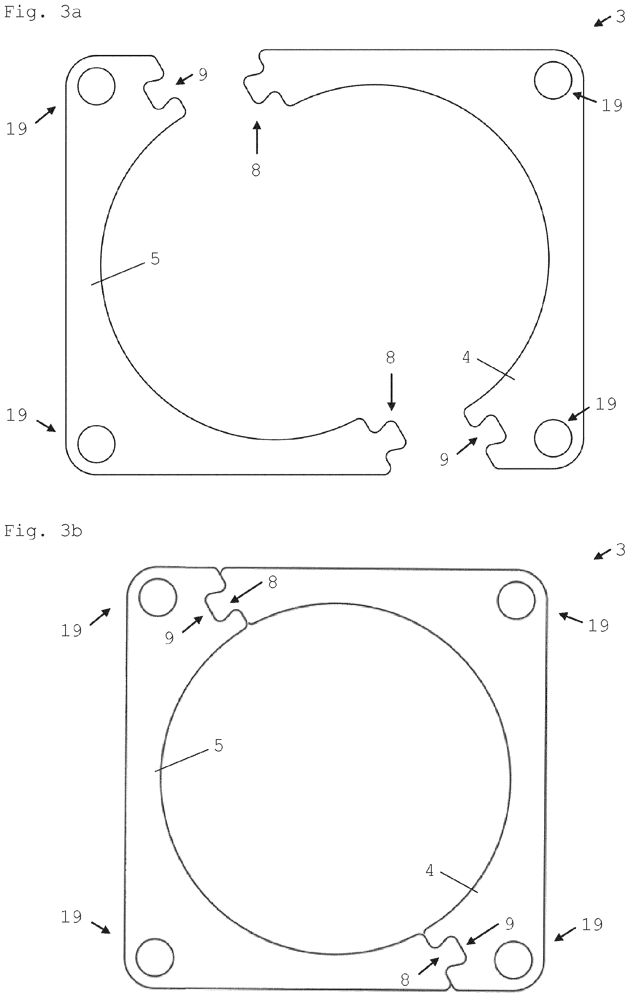

Der im Detail in den Figuren 3a und 3b dargestellte teilbare Flanschring 3 weist in der gezeigten Ausführung zwei zur Ausbildung des Flanschrings 3 miteinander verbindbare Flanschringteile 4, 5 auf.

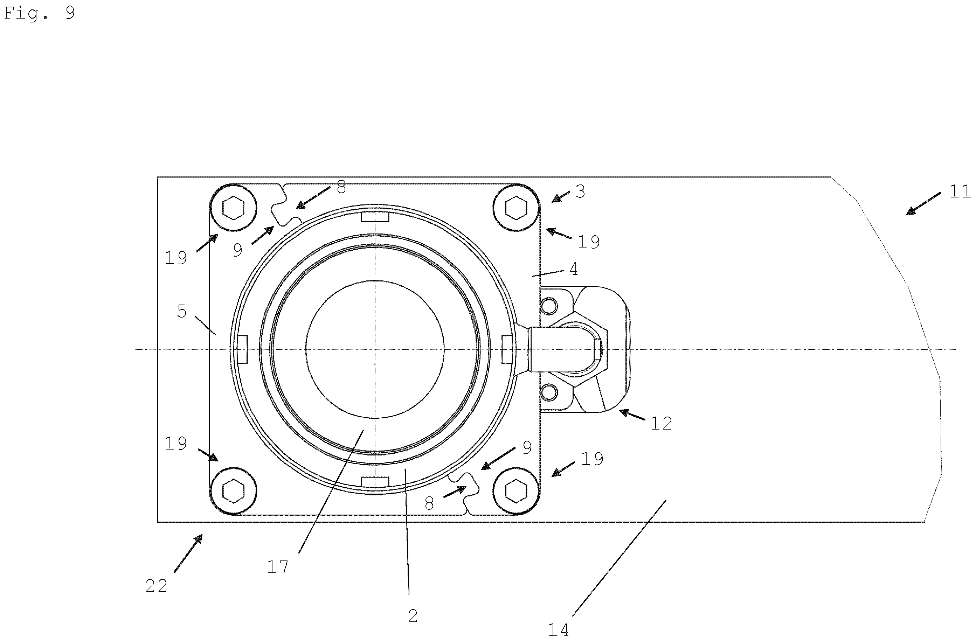

Die miteinander verbindbaren Flanschringteile 4, 5 sind, wie in den Figuren 9, 13a, 13b, 14a und 14b gezeigt, entlang eines Umfangs des Gehäuses 2 um das Gehäuse 2 herum anordenbar und mit einem der zumindest teilweise entlang eines Umfangs des Gehäuses 2 ausgebildeten Anschläge 6 in Anlage bringbar und zur Ausbildung des Flanschrings 3 miteinander verbindbar. In den in den Figuren 1 und 2 gezeigten Ausführungen sind die zwei miteinander verbindbaren Flanschringteile 4, 5 in eine Nut 7 einsetzbar und in eingesetztem Zustand in der Nut 7 zur Ausbildung des Flanschrings 3 miteinander verbindbar.

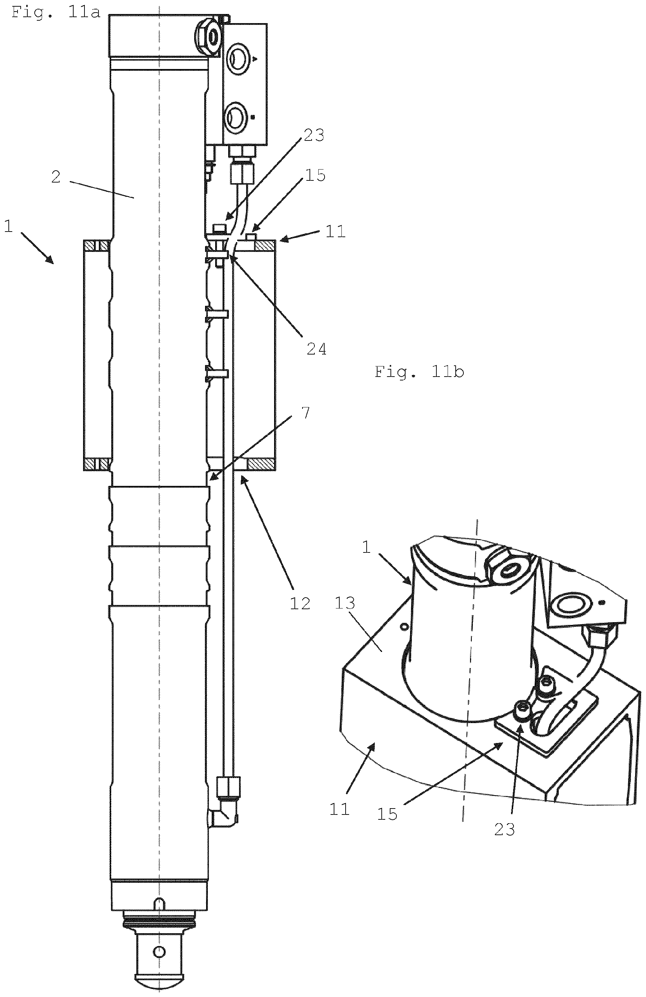

Zur Befestigung des Stützzylinders an dem Ausleger 11 ist das Gehäuse 2 des Stützzylinders 1, wie in den Figuren 11a bis 14b gezeigt, zumindest abschnittsweise in der Montageöffnung 12 anordenbar und am Ausleger 11, insbesondere an einer Unterseite 14 des Auslegers 11, über den Flanschring 3 befestigbar.

Die Anordnung umfasst weiter ein Spannblech 15 und Ausgleichsbleche 16. Ein axiales Spiel des Stützzylinders 1 in der Montageöffnung 12 ist durch das zumindest eine Spannblech 15 ausgleichbar. Ein radiales Spiel des Stützzylinders 1 in der Montageöffnung 12 ist durch das zumindest eine Ausgleichsblech 16 ausgleichbar.

Eine aus dem Gehäuse 2 des längenveränderbaren Stützzylinders 1 ausfahrbare Stange 17 ist mit einem Stützfuß 18 verbindbar.

Die Figuren 3a und 3b zeigt eine Ausführung eines teilbaren Flanschrings 2 mit zwei miteinander verbindbaren Flanschringteilen 4, 5. Die zwei Flanschringteile 4, 5 sind, wie in Figur 3b gezeigt, zur Ausbildung des Flanschrings 3 formschlüssig miteinander verbindbar.

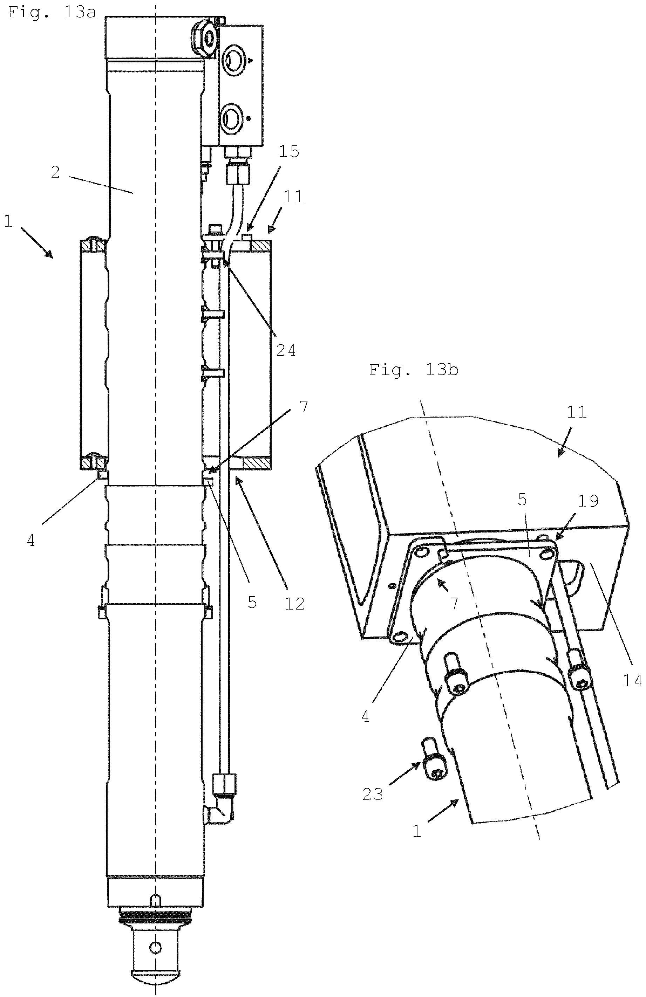

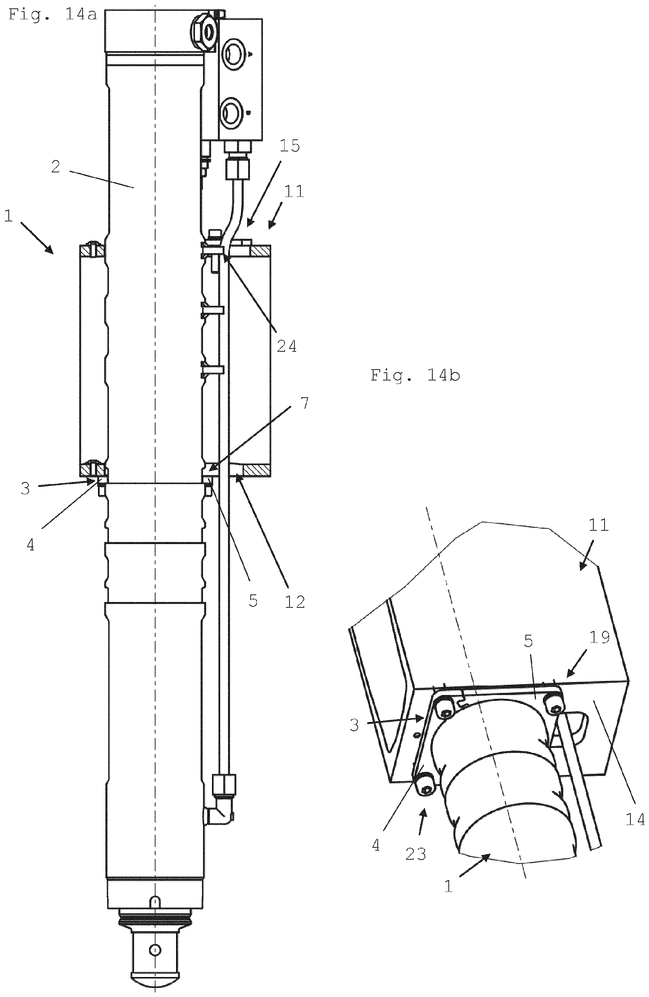

Die zumindest zwei Flanschringteile 4, 5 sind zur Ausbildung des Flanschrings 3 durch eine Relativbewegung der Flanschringteile 4, 5 entlang einer axialen Richtung des Gehäuses 2 des Stützzylinders 1 (siehe dazu speziell die Figuren 13a, 13b, 14a und 14b) formschlüssig miteinander verbindbar. Durch den Formschluss kann eine Relativbewegung der Flanschringteile 4, 5 zueinander in eine radiale Richtung des Gehäuses 2 des Stützzylinders 1 sperrbar sein.

Wie in der Ausführung der Figuren 3a und 3b dargestellt, weisen die zwei Flanschringteile 4, 5 zueinander komplementäre Verbindungsabschnitte 8, 9 mit einer Positivform und einer Negativform auf. Die Verbindungsabschnitte 8, 9 sind mit einer Schwalbenschwanzgeometrie ausgebildet und zur Ausbildung des Flanschrings 3 formschlüssig, insbesondere puzzleartig, verbindbar.

Der Flanschring 3 weist vorteilhaft an eine an eine Querschnittskontur des Gehäuses 2 des Stützzylinders 1 angepasst Innenkontur auf, wobei in der gezeigten Ausführung das Gehäuse 2 einen kreiszylindrischen Querschnitt aufweist und die Innenkontur des Flanschrings 3 entsprechend kreisrund ausgebildet ist. Der Flanschring 3 weist weiter vorteilhaft eine Außenkontur auf, die zumindest einen Befestigungsflansch 19 zur Befestigung des zumindest einen Stützzylinders 1 an dem Abstützsystem 10 ausbildet.

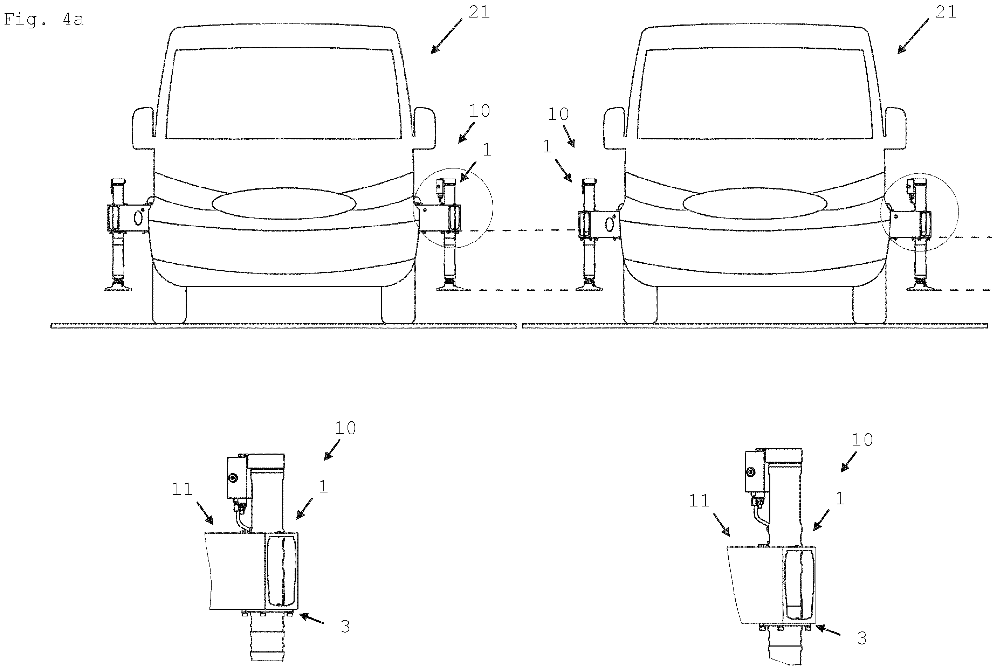

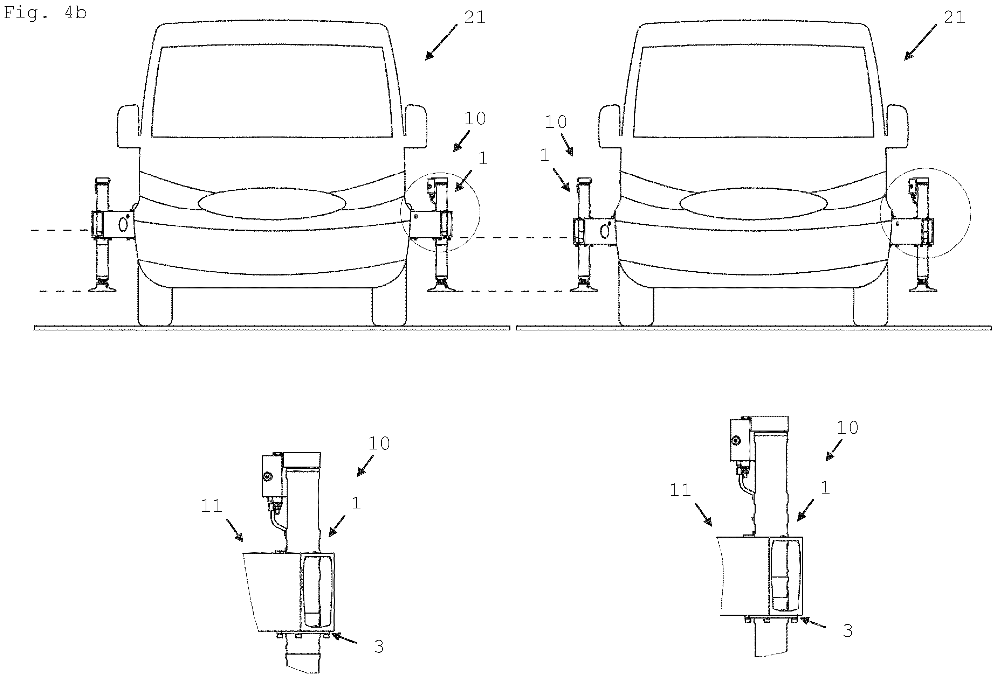

Die Figuren 4a und 4b zeigen Ansichten eines Fahrzeugs 21 mit einem Abstützsystem 10 mit an unterschiedlichen Befestigungspositionen befestigten Stützzylindern 1. Ausleger 11 von Abstützsystemen 10 können an einem Fahrzeug 21 oder einer Hebevorrichtung 20 in unterschiedlichen Höhen gegenüber einem Untergrund angeordnet sein, beispielsweise entsprechend unterschiedlicher Bauhöhen eines Fahrzeugrahmens oder einer Basis einer Hebevorrichtung 20. Unterschiedliche Höhen von Auslegern 11 gegenüber einem Untergrund sind in den Figuren 4a und 4b durch von den Auslegern 11 ausgehenden Strichlinien illustriert. Durch unterschiedliche Befestigungsposition des Stützzylinders 1 kann eine Anpassung an die Lage des Auslegers 11 erfolgen, wobei eine angepasste Befestigung durch von den Stützfüßen 18 ausgehenden Strichlinien illustriert. Dies kann durch unterschiedliche Befestigungspositionen mittels zumindest zwei entlang einer axialen Richtung des Gehäuses 2 beabstandeter Anschläge 6, insbesondere wie dargestellt durch Nuten 7, für einen Flanschring 3 erreicht werden.

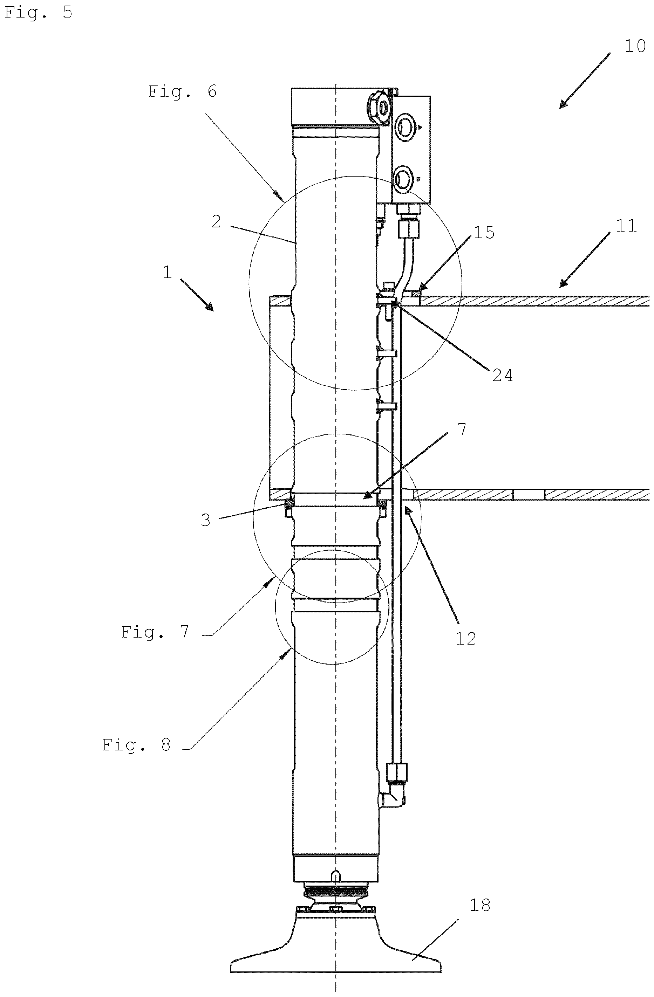

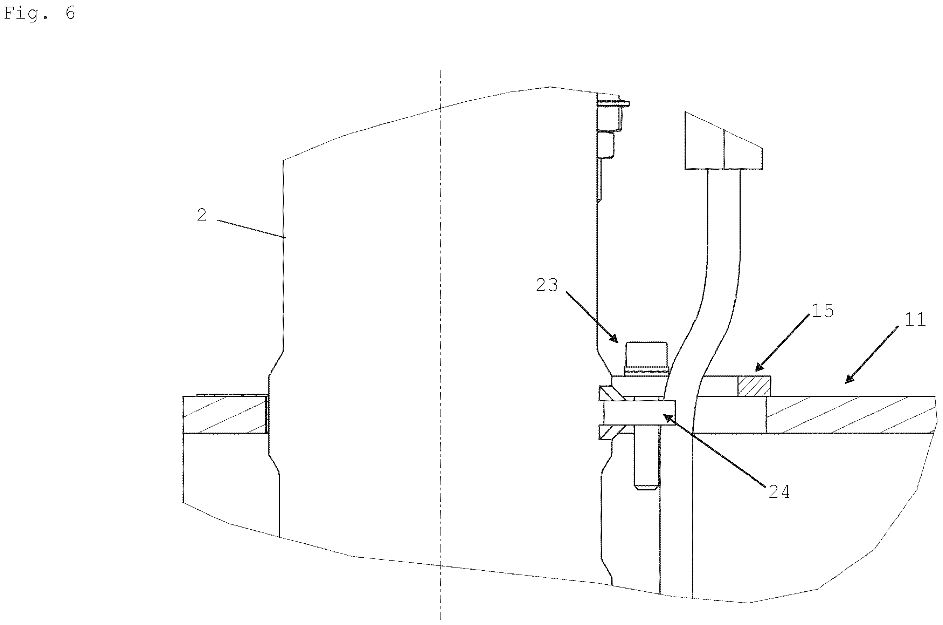

Die Figuren 5 bis 9 zeigen Schnittdarstellungen zu einem in einem Ausleger 11 eines Abstützsystems 10 befestigten Stützzylinder 1 gemäß der Ausführung der Figur 1, wobei Figur 5 eine Übersicht zeigt und in den Figuren 6 bis 8 Detailansichten gezeigt sind. Figur 9 zeigt eine Ansicht von unten.

In Figur 6 ist eine Detailansicht zu einem an einem Ausleger 11 verspannbares Spannblech 15 gezeigt, durch welches ein axiales Spiel des Stützzylinders 1 in der Montageöffnung 12 ausgleichbar sein kann. Das Spannblech 15 kann in montiertem Zustand an dem Gehäuse 2 des Stützzylinders 1 befestigt sein und am Ausleger 11 anliegen. Eine Befestigung des Spannblechs 15 am Gehäuse 2 kann wie dargestellt durch eine Verschraubung 23 erfolgen. Eine Anlage des Spannblechs kann insbesondere an einer Oberseite 13 des Auslegers 11 erfolgen.

Das Gehäuse 2 des Stützzylinders 1 kann, wie auch in den Figuren 1 und 2 sichtbar, zumindest einen Anschlag aufweisen, beispielsweise wie dargestellt in Form einer radial vom Gehäuse 2 abstehenden Lasche 24 für das Spannblech 15. Weist das Gehäuse 2 wie in Figur 5 ersichtlich zumindest zwei entlang einer axialen Richtung des Gehäuses 2 beabstandete Anschläge 6 und/oder Nuten 7 für einen Flanschring 3 auf, können zumindest zwei entlang einer axialen Richtung des Gehäuses 2 entsprechend beabstandete Laschen 24 am Gehäuse 2 angeordnet sein. Durch ein Spannblech 15 kann zudem eine Verdrehsicherung des Stützzylinders 1 in der Montageöffnung 12 des Auslegers 11 erreicht werden.

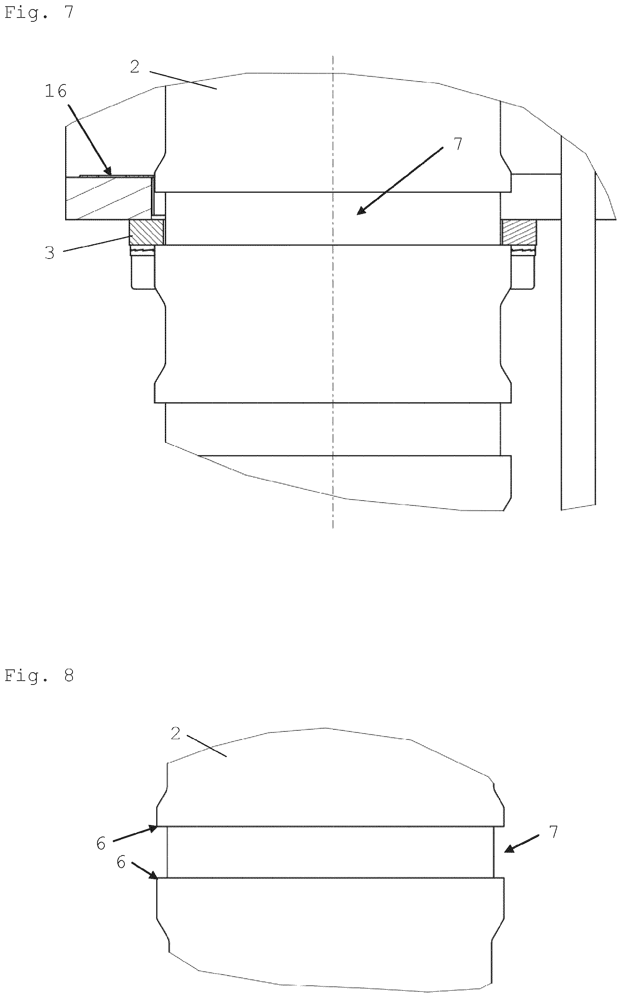

In Figur 7 ist eine Detailansicht zur Befestigung eines Stützzylinders 1 an einem Ausleger 11 gezeigt. Figur 9 zeigt eine entsprechende Ansicht von unten. Das Gehäuse 2 des Stützzylinders 1 ist abschnittsweise in der Montageöffnung 12 angeordnet und an einer Unterseite 14 des Auslegers 11 über einen in eine Nut 7 eingesetzten Flanschring 3 durch eine Verschraubung 22 befestigt. Durch eine Anlage des Flanschrings 3 an einem Anschlag 6 der Nut 7 können zumindest in einer axialen Richtung entlang des Gehäuses 2 wirkende axiale Kräfte zwischen dem Flanschring 3 und dem Stützzylinder 1 übertragbar sein. Ein zumindest in einer axialen Richtung entlang des Gehäuses 2 bestehender axialer Kraftschluss kann dabei zumindest durch einen axialen Formschluss zwischen dem Flanschring 3 und dem zumindest einen Anschlag 6 der Nut 7 gegeben sein.

In Figur 7 ist auch erkennbar, dass der Flanschring 3 eine Höhenerstreckung aufweist und die zumindest eine Nut 7 entlang des Gehäuses 2 des Stützzylinders 1 im Wesentlichen eine axiale Erstreckung mit der doppelten Höhenerstreckung des Flanschrings 3 aufweist.

In Figur 7 ist weiter eine Detailansicht zu einem gemeinsam mit dem Stützzylinder 1 in die Montageöffnung 12 einsetzbares Ausgleichsblech 16 gezeigt, wobei ein radiales Spiel des Stützzylinders 1 in der Montageöffnung 12 durch das zumindest eine Ausgleichsblech 16 ausgleichbar ist. Vorzugsweise kann das Ausgleichsblech 16 gemeinsam mit dem Stützzylinder 1 in eine Montageöffnung 12 an einer Oberseite 13 und/oder einer Unterseite 15 des Auslegers 11 einsetzbar sein.

Figur 8 zeigt eine Detailansicht einer im Gehäuse 2 des Stützzylinders 1 ausgebildeten Nut 7. Das Gehäuse 2 kann zur Ausbildung zumindest einer Nut 7 zumindest zwei entlang einer axialen Richtung des Gehäuses 2 gegenüberliegende Anschläge 6 zur formschlüssigen Aufnahme des zumindest einen Flanschrings 3 aufweisen, wobei die zumindest zwei miteinander verbindbaren Flanschringteile 4, 5 in die zumindest eine Nut 7 einsetzbar sind und in eingesetztem Zustand in der Nut 7 zur Ausbildung des Flanschrings 3 miteinander verbindbar sind. Weist das Gehäuse 2 zumindest zwei entlang einer axialen Richtung des Gehäuses 2 beabstandete Nuten 7 zur formschlüssigen Aufnahme eines Flanschrings 3 auf, können die zumindest zwei miteinander verbindbaren Flanschringteile 4, 5 in eine der zumindest zwei Nuten 7 einsetzbar sein und in eingesetztem Zustand in der Nut 7 zur Ausbildung des Flanschrings 3 miteinander verbindbar sein.

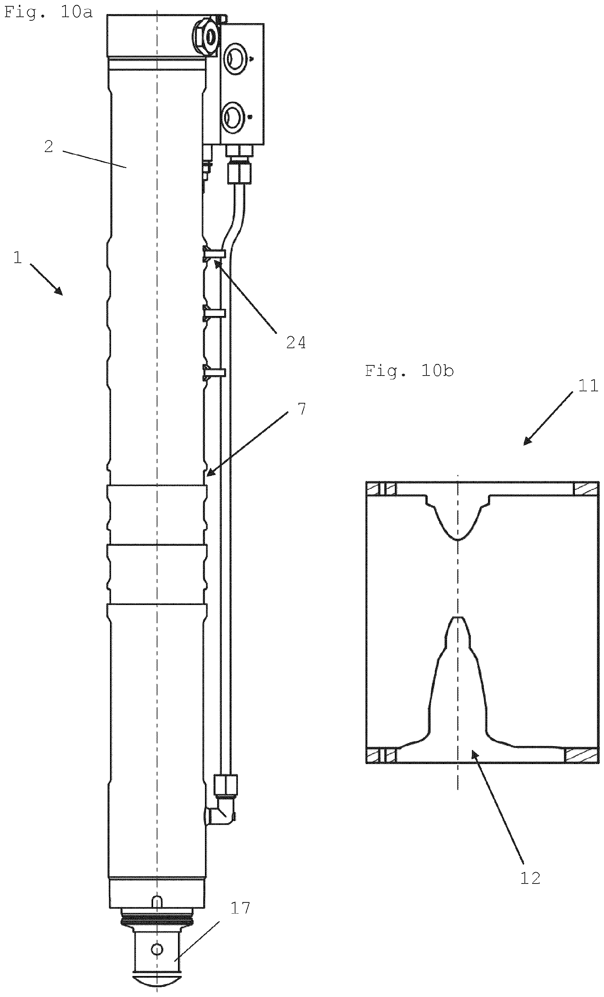

In den Figuren 10a bis 14b ist ein Ablauf einer Befestigung eines Stützzylinders 1 an einem Ausleger 11 eines Abstützsystems 10 gezeigt.

Die Figuren 10a und 10b zeigen einen zu befestigenden Stützzylinder 1 gemäß der Ausführung der Figur 1 und eine Schnittdarstellung eines Auslegers 10 mit einer Montageöffnung 12, welche sich von einer Oberseite 13 zu einer Unterseite 14 des Auslegers 11 erstreckt.

In der Ansicht der Figuren 11a und 11b ist das Gehäuse 2 des Stützzylinders 1 abschnittsweise in der Montageöffnung 12 angeordnet. Ein Spannblech 15 ist an einer Lasche 24 des Gehäuses verschraubt und liegt an der Oberseite 13 des Ausleger 11 auf.

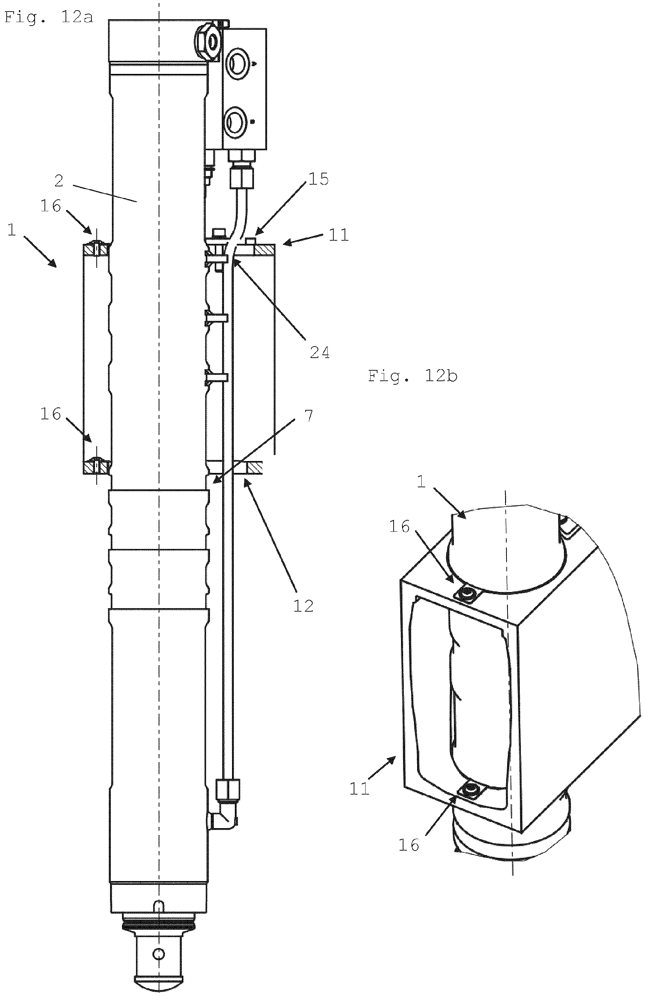

In der Ansicht der Figuren 12a und 12b sind zwei Ausgleichsbleche 16 gemeinsam mit dem Stützzylinder 1 in die Montageöffnung 12 eingesetzt.

Die Figuren 13a und 13b zeigen Ansichten eines in der Montageöffnung 12 angeordneten Stützzylinders 1 mit in eine Nut 7 eingesetzten Flanschringteilen 3, 4. Die in die Nut 7 eingesetzten und noch unverbundenen Flanschringteile 3, 4 weisen zueinander einen Versatz entlang einer axialen Richtung des Gehäuses 2 auf. Die Flanschringteile 4, 5 sind in eingesetztem Zustand in der Nut 7 zur Ausbildung des Flanschrings 3 durch eine Relativbewegung der Flanschringteile 4, 5 entlang einer axialen Richtung des Gehäuses 2 des Stützzylinders 1 formschlüssig miteinander verbindbar.

Die Figuren 14a und 14b zeigen Ansichten eines an einem Ausleger 11 über einen Flanschring 3 befestigten Stützzylinders 1, wobei die Flanschringteile 4, 5 in eingesetztem Zustand in der Nut 7 zur Ausbildung des Flanschrings 3 durch eine Relativbewegung der Flanschringteile 4, 5 entlang einer axialen Richtung des Gehäuses 2 des Stützzylinders 1 formschlüssig miteinander verbunden wurden. Der Flanschring 3 ist mit dem Befestigungsflansch 19 über eine Verschraubung 22 an der Unterseite 14 des Auslegers 11 befestigt.

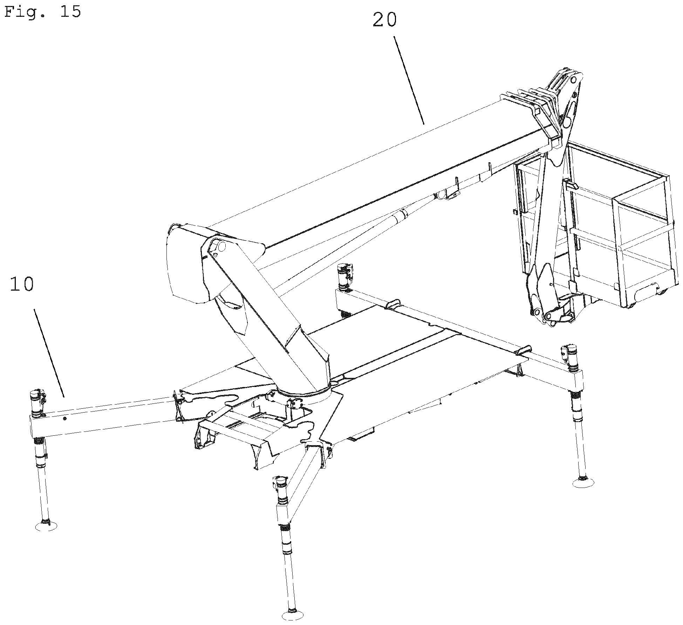

Figur 15 zeigt eine Hebevorrichtung 20 mit einem Abstützsystem 10.

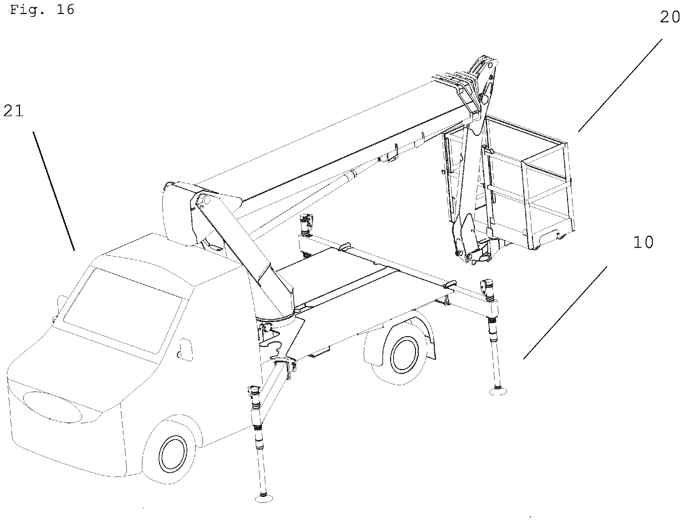

Figur 16 zeigt ein Fahrzeug 21 mit einer solchen Hebevorrichtung 20 mit Abstützsystem 10.

### Bezugszeichenliste:

- 1: Stützzylinder
- 2: Gehäuse
- 3: Flanschring
- 4: Flanschringteil
- 5: Flanschringteil
- 6: Anschlag
- 7: Nut
- 8: Verbindungsabschnitt
- 9: Verbindungsabschnitt
- 10: Abstützsystem
- 11: Ausleger
- 12: Montageöffnung
- 13: Oberseite Ausleger
- 14: Unterseite Ausleger
- 15: Spannblech
- 16: Ausgleichsblech
- 17: Stange
- 18: Stützfuß
- 19: Befestigungsflansch
- 20: Hebevorrichtung
- 21: Fahrzeug
- 22: Verschraubung
- 23: Verschraubung
- 24: Lasche

## Patentansprüche

1. Anordnung mit
einem Stützzylinder (1) für ein Abstützsystem (10) einer Hebevorrichtung (20) und
zumindest einem Flanschring (3) zur Befestigung des Stützzylinders (1) an dem Abstützsystem (10), wobei
der Stützzylinder (1) ein Gehäuse (2) mit zumindest einem zumindest teilweise entlang eines Umfangs des Gehäuses (2) ausgebildeten Anschlag (6) für eine zumindest in axialer Richtung entlang des Gehäuses (2) formschlüssige Anlage des zumindest einen Flanschrings (3) aufweist, wobei
der Flanschring (3) teilbar ist und zumindest zwei zur Ausbildung des Flanschrings (3) miteinander verbindbare Flanschringteile (4, 5) aufweist, wobei
die zumindest zwei miteinander verbindbaren Flanschringteile (4, 5) entlang eines Umfangs des Gehäuses (2) um das Gehäuse (2) herum anordenbar sind und mit dem zumindest einen zumindest teilweise entlang eines Umfangs des Gehäuses (2) ausgebildeten Anschlag (6) in Anlage bringbar und zur Ausbildung des Flanschrings (3) miteinander verbindbar sind.

2. Anordnung nach einem der vorangehenden Ansprüche, wobei der zumindest eine Anschlag (6) in Form eines vom Gehäuse (2) des Stützzylinders (1) radial abstehenden Stegs und/oder in Form einer radialen Ausnehmung ausgebildet ist.

3. Anordnung nach dem vorangehenden Anspruch, wobei das Gehäuse (2) zumindest zwei entlang einer axialen Richtung des Gehäuses (2) beabstandete Anschläge (6) zur Anlage des zumindest einen Flanschrings (3) aufweist, wobei die zumindest zwei miteinander verbindbaren Flanschringteile (4, 5) mit einem der zumindest zwei Anschläge (6) in Anlage bringbar und zur Ausbildung des Flanschrings (3) miteinander verbindbar sind.

4. Anordnung nach einem der vorangehenden Ansprüche, wobei das Gehäuse (2) zur Ausbildung zumindest einer Nut (7) zumindest zwei entlang einer axialen Richtung des Gehäuses (2) gegenüberliegende Anschläge (6) zur formschlüssigen Aufnahme des zumindest einen Flanschrings (3) aufweist, wobei die zumindest zwei miteinander verbindbaren Flanschringteile (4, 5) in die zumindest eine Nut (7) einsetzbar sind und in eingesetztem Zustand in der Nut (7) zur Ausbildung des Flanschrings (3) miteinander verbindbar sind.

5. Anordnung nach dem vorangehenden Anspruch, wobei das Gehäuse (2) zumindest zwei entlang einer axialen Richtung des Gehäuses (2) beabstandete Nuten (7) zur formschlüssigen Aufnahme eines Flanschrings (3) aufweist, wobei die zumindest zwei miteinander verbindbaren Flanschringteile (4, 5) in eine der zumindest zwei Nuten (7) einsetzbar sind und in eingesetztem Zustand in der Nut (7) zur Ausbildung des Flanschrings (3) miteinander verbindbar sind.

6. Anordnung nach einem der beiden vorangehenden Ansprüche, wobei der Flanschring (3) eine Höhenerstreckung aufweist und die zumindest eine Nut (7) entlang des Gehäuses (2) des Stützzylinders (1) im Wesentlichen eine axiale Erstreckung mit der doppelten Höhenerstreckung des Flanschrings (3) aufweist.

7. Anordnung nach einem der vorangehenden Ansprüche, wobei die zumindest zwei Flanschringteile (4, 5) zur Ausbildung des Flanschrings (3) formschlüssig miteinander verbindbar sind, wobei vorzugsweise durch den Formschluss eine Relativbewegung der Flanschringteile (4, 5) zueinander in eine radiale Richtung des Gehäuses (2) des Stützzylinders (1) sperrbar ist.

8. Anordnung nach einem der vorangehenden Ansprüche, wobei die zumindest zwei Flanschringteile (4, 5) zur Ausbildung des Flanschrings (3) durch eine Relativbewegung der Flanschringteile (4, 5) entlang einer axialen Richtung des Gehäuses (2) des Stützzylinders (1) formschlüssig miteinander verbindbar sind, wobei vorzugsweise durch den Formschluss eine Relativbewegung der Flanschringteile (4, 5) zueinander in eine radiale Richtung des Gehäuses (2) des Stützzylinders (1) sperrbar ist.

9. Anordnung nach einem der vorangehenden Ansprüche, wobei die zumindest zwei Flanschringteile (4, 5) zueinander komplementäre Verbindungsabschnitte (8, 9) mit zumindest einer Positivform und/oder zumindest einer Negativform, vorzugsweise mit einer Schwalbenschwanzgeometrie, aufweisen und zur Ausbildung des Flanschrings (3) formschlüssig, vorzugsweise puzzleartig, verbindbar sind.

10. Anordnung nach einem der vorangehenden Ansprüche, wobei der zumindest eine Flanschring (3) eine an eine Querschnittskontur des Gehäuses (2) des Stützzylinders (1) angepasst Innenkontur aufweist und eine Außenkontur des Flanschrings (3) zumindest einen Befestigungsflansch (19) zur Befestigung des zumindest einen Stützzylinders (1) an dem Abstützsystem (10) ausbildet.

11. Abstützsystem (10) mit
zumindest einem Ausleger (11) mit einer Montageöffnung (12) zur Aufnahme zumindest eines Stützzylinders (1) und
zumindest einer Anordnung mit einem Stützzylinder (1) und zumindest einem teilbaren Flanschring (3) nach einem der vorangehenden Ansprüche,
wobei das Gehäuse (2) des zumindest einen Stützzylinders (1) zumindest abschnittsweise in der Montageöffnung (12) anordenbar ist und am Ausleger (11), insbesondere an einer Unterseite (14) des zumindest einen Auslegers (11), über den zumindest einen Flanschring (3) befestigbar ist.

12. Abstützsystem (10) nach dem vorangehenden Anspruch, wobei
die Anordnung zumindest ein an dem zumindest einen Ausleger (11), insbesondere an einer Oberseite (13) des zumindest einen Auslegers (11), verspannbares Spannblech (15) umfasst,
wobei ein axiales Spiel des Stützzylinders (1) in der Montageöffnung (12) durch das zumindest eine Spannblech (15) ausgleichbar ist, und/oder
die Anordnung zumindest ein gemeinsam mit dem Stützzylinder (1) in die Montageöffnung (12) einsetzbares Ausgleichsblech (16) umfasst, wobei ein radiales Spiel des Stützzylinders (1) in der Montageöffnung (12) durch das zumindest eine Ausgleichsblech (16) ausgleichbar ist.

13. Hebevorrichtung (20), vorzugsweise Kran oder Hebebühne, mit zumindest einem Abstützsystem (10) nach Anspruch 11 oder 12.

14. Fahrzeug (21) mit zumindest einer Hebevorrichtung (20) mit zumindest einem Abstützsystem (10) nach Anspruch 11 oder 12.

15. Fahrzeug (21) mit zumindest einem Abstützsystem (10) nach Anspruch 11 oder 12.
